# EUROPEAN PATENT APPLICATION

(11) **EP 4 761 324 A1**
(43) Date of publication of application: **17.06.2026**
(21) Application number: 24853590.8
(22) Date of filing: 02.08.2024
(51) Int. Cl.: H04W 24/02, H04W 24/10

(54) **CSI REPORT SENDING METHOD AND APPARATUS, CSI REPORT RECEIVING METHOD AND APPARATUS, AND STORAGE MEDIUM**

(30) Priority: 11.08.2023 CN 202311017431
(71) Applicant: Datang Mobile Communications Equipment Co., Ltd., Beijing 100085 (CN)
(72) Inventor: YANG, Meiying, Beijing 100085 (CN); WANG, Jiaqing, Beijing 100085 (CN); LUO, Chen, Beijing 100085 (CN); SU, Yuwan, Beijing 100085 (CN)
(74) Representative: Studio Torta S.p.A.
(86) International application number: PCT/CN2024/109609
(87) International publication number: WO 2025/036178

(57) **Abstract**

Embodiments of the present disclosure provide a CSI report sending method and apparatus, a CSI report receiving method and apparatus, and a storage medium. The sending method comprises: receiving configuration information and first information sent by a network device; and sending a CSI report to the network device on the basis of the configuration information and the first information, wherein the configuration information comprises CSI reporting sub-configurations, triggering state configurations, and an association relationship between the triggering state configurations and the CSI reporting sub-configurations, and the first information is used for triggering some or all of the CSI reporting sub-configurations.

## Description

### CROSS-REFERENCE TO RELATED APPLICATIONS

The application claims the priority of Chinese patent application No. 202311017431.4, filed on August 11, 2023, titled "CSI report sending method and apparatus, CSI report receiving method and apparatus, and storage medium", the entire content of which is incorporated herein by reference.

### TECHNICAL FIELD

The disclosure relates to a field of communication technology, in particular to a method for sending a CSI report, a method for receiving a CSI report, an apparatus for sending a CSI report, an apparatus for receiving a CSI report and a storage medium.

### BACKGROUND

CSI measurement and reporting is closely tied to a CSI framework (including a resource setting portion and a reporting setting portion), and need to adapt to switching on and off of transceiver units (TXRUs) in an antenna array.

In an existing CSI report mechanism, only a CSI report corresponding to one antenna unit can be reported when different TXRUs are switched off or on, and thus antenna pattern changes cannot be reflected. Although network energy consumption is reduced, it causes the reduction of network performance.

### SUMMARY

To address the above problems in related arts, the embodiments of the disclosure provide a method for sending a CSI report, a method for receiving a CSI report, an apparatus for sending a CSI report, an apparatus for receiving a CSI report and a storage medium.

According to a first aspect, the embodiments of the disclosure provide a method for sending a CSI report. The method includes:
receiving configuration information and first information sent by a network device; and
sending the CSI report to the network device based on the configuration information and the first information;
in which the configuration information includes a CSI report sub-configuration, a trigger state configuration and an association relationship between the trigger state configuration and the CSI report sub-configuration; and
the first information is used to trigger part or all of CSI report sub-configurations.

Optionally, the trigger state configuration includes a first trigger state configuration and a second trigger state configuration;
the first trigger state configuration is associated with an entire set of the CSI report sub-configurations supported by a network; and
the second trigger state configuration is associated with a subset of the entire set of the CSI report sub-configurations supported by the network.

Optionally, different trigger state configurations are associated with an entire set of the CSI report sub-configurations supported by a network.

Optionally, different trigger state configurations are associated with a subset of an entire set of the CSI report sub-configurations supported by a network.

Optionally, the association relationship includes:
the trigger state configuration is directly associated with the CSI report sub-configuration; or,
the configuration information further includes a CSI report configuration, and the trigger state configuration is associated with the CSI report sub-configuration through the CSI report configuration.

Optionally, the association relationship is indicated by a code point of a dynamic signaling sent by the network device.

Optionally, the trigger state configuration and the CSI report sub-configuration are configured via a high-layer signaling.

Optionally, the first information is included in a radio resource control (RRC) signaling and/or a dynamic signaling sent by the network device.

Optionally, the first information is further used to indicate a number and/or an index of the part or all of the CSI report sub-configurations.

Optionally, the CSI report includes an antenna pattern corresponding to the CSI report sub-configuration triggered by the first information.

According to a second aspect, the embodiments of the disclosure provide a method for receiving a CSI report. The method includes:
sending configuration information and first information to a terminal, in which the configuration information includes a CSI report sub-configuration, a trigger state configuration and an association relationship between the trigger state configuration and the CSI report sub-configuration, and the first information is used to trigger part or all of CSI report sub-configurations; and
receiving the CSI report sent by the terminal based on the configuration information and the first information.

Optionally, the trigger state configuration includes a first trigger state configuration and a second trigger state configuration;
the first trigger state configuration is associated with an entire set of the CSI report sub-configurations supported by a network; and
the second trigger state configuration is associated with a subset of the entire set of the CSI report sub-configurations supported by the network.

Optionally, different trigger state configurations are associated with an entire set of the CSI report sub-configurations supported by a network.

Optionally, different trigger state configurations are associated with a subset of an entire set of the CSI report sub-configurations supported by a network.

Optionally, the association relationship includes:
the trigger state configuration is directly associated with the CSI report sub-configuration; or,
the configuration information further includes a CSI report configuration, and the trigger state configuration is associated with the CSI report sub-configuration through the CSI report configuration.

Optionally, the association relationship is indicated by a code point of a dynamic signaling sent by a network device.

Optionally, the trigger state configuration and the CSI report sub-configuration are configured via a high-layer signaling.

Optionally, the first information is included in an RRC signaling and/or a dynamic signaling sent by a network device.

Optionally, the first information is further used to indicate a number and/or an index of the part or all of the CSI report sub-configurations.

Optionally, the method further includes:
determining an antenna pattern corresponding to the CSI report sub-configuration triggered by the first information based on the CSI report.

According to a third aspect, the embodiments of the disclosure provide a terminal. The terminal includes: a memory, a transceiver and a processor. The memory is configured to store a computer program, the transceiver is configured to send and receive data under the control of the processor, and the processor is configured to read the computer program from the memory and perform the following operations:
receiving configuration information and first information sent by a network device; and
sending a CSI report to the network device based on the configuration information and the first information;
in which the configuration information includes a CSI report sub-configuration, a trigger state configuration and an association relationship between the trigger state configuration and the CSI report sub-configuration; and
the first information is used to trigger part or all of CSI report sub-configurations.

Optionally, the trigger state configuration includes a first trigger state configuration and a second trigger state configuration;
the first trigger state configuration is associated with an entire set of the CSI report sub-configurations supported by a network; and
the second trigger state configuration is associated with a subset of the entire set of the CSI report sub-configurations supported by the network.

Optionally, different trigger state configurations are associated with an entire set of the CSI report sub-configurations supported by a network.

Optionally, different trigger state configurations are associated with a subset of an entire set of the CSI report sub-configurations supported by a network.

Optionally, the association relationship includes:
the trigger state configuration is directly associated with the CSI report sub-configuration; or,
the configuration information further includes a CSI report configuration, and the trigger state configuration is associated with the CSI report sub-configuration through the CSI report configuration.

Optionally, the association relationship is indicated by a code point of a dynamic signaling sent by the network device.

Optionally, the trigger state configuration and the CSI report sub-configuration are configured via a high-layer signaling.

Optionally, the first information is included in an RRC signaling and/or a dynamic signaling sent by the network device.

Optionally, the first information is further used to indicate a number and/or an index of the part or all of the CSI report sub-configurations.

Optionally, the CSI report includes an antenna pattern corresponding to the CSI report sub-configuration triggered by the first information.

According to a fourth aspect, the embodiments of the disclosure provide a network device. The network device includes: a memory, a transceiver and a processor. The memory is configured to store a computer program, the transceiver is configured to send and receive data under the control of the processor, and the processor is configured to read the computer program from the memory and perform the following operations:
sending configuration information and first information to a terminal, in which the configuration information includes a CSI report sub-configuration, a trigger state configuration and an association relationship between the trigger state configuration and the CSI report sub-configuration, and the first information is used to trigger part or all of CSI report sub-configurations; and
receiving the CSI report sent by the terminal based on the configuration information and the first information.

Optionally, the trigger state configuration includes a first trigger state configuration and a second trigger state configuration;
the first trigger state configuration is associated with an entire set of the CSI report sub-configurations supported by a network; and
the second trigger state configuration is associated with a subset of the entire set of the CSI report sub-configurations supported by the network.

Optionally, different trigger state configurations are associated with an entire set of the CSI report sub-configurations supported by a network.

Optionally, different trigger state configurations are associated with a subset of an entire set of the CSI report sub-configurations supported by a network.

Optionally, the association relationship includes:
the trigger state configuration is directly associated with the CSI report sub-configuration; or,
the configuration information further includes a CSI report configuration, and the trigger state configuration is associated with the CSI report sub-configuration through the CSI report configuration.

Optionally, the association relationship is indicated by a code point of a dynamic signaling sent by the network device.

Optionally, the trigger state configuration and the CSI report sub-configuration are configured via a high-layer signaling.

Optionally, the first information is included in an RRC signaling and/or a dynamic signaling sent by the network device.

Optionally, the first information is further used to indicate a number and/or an index of the part or all of the CSI report sub-configurations.

Optionally, the network device is further configured to:
determine an antenna pattern corresponding to the CSI report sub-configuration triggered by the first information based on the CSI report.

According to a fifth aspect, the embodiments of the disclosure provide an apparatus for sending a CSI report. The apparatus includes:
a receiving module, configured to receive configuration information and first information sent by a network device; and
a sending module, configured to send the CSI report to the network device based on the configuration information and the first information;
in which the configuration information includes a CSI report sub-configuration, a trigger state configuration and an association relationship between the trigger state configuration and the CSI report sub-configuration; and
the first information is used to trigger part or all of CSI report sub-configurations.

Optionally, the trigger state configuration includes a first trigger state configuration and a second trigger state configuration;
the first trigger state configuration is associated with an entire set of the CSI report sub-configurations supported by a network; and
the second trigger state configuration is associated with a subset of the entire set of the CSI report sub-configurations supported by the network.

Optionally, different trigger state configurations are associated with an entire set of the CSI report sub-configurations supported by a network.

Optionally, different trigger state configurations are associated with a subset of an entire set of the CSI report sub-configurations supported by a network.

Optionally, the association relationship includes:
the trigger state configuration is directly associated with the CSI report sub-configuration; or,
the configuration information further includes a CSI report configuration, and the trigger state configuration is associated with the CSI report sub-configuration through the CSI report configuration.

Optionally, the association relationship is indicated by a code point of a dynamic signaling sent by the network device.

Optionally, the trigger state configuration and the CSI report sub-configuration are configured via a high-layer signaling.

Optionally, the first information is included in an RRC signaling and/or a dynamic signaling sent by the network device.

Optionally, the first information is further used to indicate a number and/or an index of the part or all of the CSI report sub-configurations.

Optionally, the CSI report includes an antenna pattern corresponding to the CSI report sub-configuration triggered by the first information.

According to a sixth aspect, the embodiments of the disclosure provide an apparatus for receiving a CSI report. The apparatus includes:
a sending module, configured to send configuration information and first information to a terminal, in which the configuration information includes a CSI report sub-configuration, a trigger state configuration and an association relationship between the trigger state configuration and the CSI report sub-configuration, and the first information is used to trigger part or all of CSI report sub-configurations; and
a receiving module, configured to receive the CSI report sent by the terminal based on the configuration information and the first information.

Optionally, the trigger state configuration includes a first trigger state configuration and a second trigger state configuration;
the first trigger state configuration is associated with an entire set of the CSI report sub-configurations supported by a network; and
the second trigger state configuration is associated with a subset of the entire set of the CSI report sub-configurations supported by the network.

Optionally, different trigger state configurations are associated with an entire set of the CSI report sub-configurations supported by a network.

Optionally, different trigger state configurations are associated with a subset of an entire set of the CSI report sub-configurations supported by a network.

Optionally, the association relationship includes:
the trigger state configuration is directly associated with the CSI report sub-configuration; or,
the configuration information further includes a CSI report configuration, and the trigger state configuration is associated with the CSI report sub-configuration through the CSI report configuration.

Optionally, the association relationship is indicated by a code point of a dynamic signaling sent by a network device.

Optionally, the trigger state configuration and the CSI report sub-configuration are configured via a high-layer signaling.

Optionally, the first information is included in an RRC signaling and/or a dynamic signaling sent by a network device.

Optionally, the first information is further used to indicate a number and/or an index of the part or all of the CSI report sub-configurations.

Optionally, the apparatus further includes:
a determining module, configured to determine an antenna pattern corresponding to the CSI report sub-configuration triggered by the first information based on the CSI report.

According to a seventh aspect, the embodiments of the disclosure provide a processor-readable storage medium. The processor-readable storage medium stores a computer program, and the computer program is used to cause a processor to implement the method for sending the CSI report in the first aspect or the method for receiving the CSI report in the second aspect.

According to an eighth aspect, the embodiments of the disclosure provide a non-transitory readable storage medium. The non-transitory readable storage medium stores a computer program, and the computer program is used to cause a computer to implement the method for sending the CSI report in the first aspect or the method for receiving the CSI report in the second aspect.

According to a ninth aspect, the embodiments of the disclosure provide a communication device. The communication device stores a computer program, and the computer program is used to cause the communication device to implement the method for sending the CSI report in the first aspect or the method for receiving the CSI report in the second aspect.

According to a tenth aspect, the embodiments of the disclosure provide a chip product. The chip product stores a computer program, and the computer program is used to cause the chip product to implement the method for sending the CSI report in the first aspect or the method for receiving the CSI report in the second aspect.

According to the method for sending the CSI report, the method for receiving the CSI report, the apparatus for sending the CSI report, the apparatus for receiving the CSI report and the storage medium provided in the embodiments of the disclosure, the part or all of the CSI report sub-configurations configured on the network side are triggered through the first information. The terminal supports the CSI report configuration with the plurality of sub-configurations, which enables it to report a plurality of CSI frameworks in one CSI report instance. Each CSI framework corresponds to one CSI sub-configuration, and each CSI sub-configuration corresponds to one antenna pattern. Therefore, when different TXRUs are switched off and on, channel state changes caused by changes in antenna patterns are well reflected, which achieves better link adaptation and better transmission performance, thereby achieving a trade-off between network energy consumption and network performance.

### BRIEF DESCRIPTION OF THE DRAWINGS

To clearly illustrate the technical solutions in the embodiments of the disclosure or related arts, the drawings used in the embodiments or the related arts are briefly introduced below. Obviously, the following drawings are only some embodiments of the disclosure. For those skilled in the field, other drawings can be obtained based on these drawings without inventive work.
FIG. 1 is a first schematic flowchart of an aperiodic CSI measurement and report provided by an embodiment of the disclosure.
FIG. 2 is a schematic flowchart of a semi-persistent CSI measurement and report provided by an embodiment of the disclosure.
FIG. 3 is a schematic flowchart of a method for sending a CSI report provided by an embodiment of the disclosure.
FIG. 4 is a second schematic flowchart of an aperiodic CSI measurement and report provided by an embodiment of the disclosure.
FIG. 5 is a third schematic flowchart of an aperiodic CSI measurement and report provided by an embodiment of the disclosure.
FIG. 6 is a fourth schematic flowchart of an aperiodic CSI measurement and report provided by an embodiment of the disclosure.
FIG. 7 is a fifth schematic flowchart of an aperiodic CSI measurement and report provided by an embodiment of the disclosure.
FIG. 8 is a schematic flowchart of a method for receiving a CSI report provided by an embodiment of the disclosure.
FIG. 9 is a schematic structural diagram of a terminal provided by an embodiment of the disclosure.
FIG. 10 is a schematic structural diagram of a network device provided by an embodiment of the disclosure.
FIG. 11 is a schematic structural diagram of an apparatus for sending a CSI report provided by an embodiment of the disclosure.
FIG. 12 is a schematic structural diagram of an apparatus for receiving a CSI report provided by an embodiment of the disclosure.

### DETAILED DESCRIPTION

Compared to fourth generation mobile communications, fifth generation mobile communications (5G) new radio (NR) system requires high-frequency band, wide-bandwidth, large-scale antenna technologies. As system performance improves, the power consumption of 5G base station has increased to 2-3 times that of 4G base station. Therefore, energy consumption becomes a primary indicator of operating expense (OPEX). According to operator data, energy costs in mobile networks account for about 23% of a total OPEX, which significantly affects widespread deployment of 5G networks. Energy consumption issues have also constrained its application in vertical industries and large-scale adoption of 5G terminals.

According to actual measurement results, most of the energy consumption of a base station comes from a wireless access network, especially an active antenna unit (AAU). The AAU at least includes a radio frequency and antenna unit. The base station controls its spatial network energy consumption by switching TXRUs on or off. When the TXRUs are switched on or off, the corresponding CSI measurement and report shall adapt to the switching condition of TXRUs.

When the TXRUs are switched off or on, there is no standardized approach for corresponding CSI measurement and report. In the NR Release-17 (Rel-17) specification, CSI measurement and report is closely tied to a CSI framework. The CSI framework includes: a resource setting portion and a reporting setting portion.

Resource setting is used to configure a high-layer signaling CSI-ResourceConfig information element (IE) corresponding to a CSI reference signal. In the specification, "resource setting" means the same as "CSI-ResourceConfig". Each CSI-ResourceConfig includes at least one non zero power (NZP)-CSI-reference signal (RS)-synchronization signal block (SSB) and/or at least one NZP-CSI-RS-ResourceSet. Each NZP-CSI-RS-ResourceSet includes at least one NZP-CSI-RS-Resource.

Reporting setting is primarily accomplished through an RRC layer signaling CSI-ReportConfig IE, and is used to configure CSI reporting behaviors. In the specification, "reporting setting" means the same as "CSI-ReportConfig". Each CSI-ReportConfig is associated with one or more CSI-ResourceConfigs, and indicates a resource configuration used for channel measurement and/or interference measurement.

In addition, each CSI-ReportConfig also includes:
a CSI reporting time-domain behavior (including a periodic behavior, a semi-persistent on physical uplink control channel (PUCCH) behavior, and a semi-persistent on physical uplink share channel (PUSCH) behavior), and an aperiodic CSI reporting type and its corresponding reporting resource configuration such as a period and an offset;
a CSI reporting related frequency-domain behavior, such as a frequency-domain granularity of channel quality indicator (CQI) and precoder matrix indicator (PMI), including both wideband and sub-band;
a measurement limit configuration, including a limit for channel measurement and a limit for interference measurement; and
a CSI-related indicator reported by a user equipment (UE), including a CQI, a PMI, a CSI-RS resource indicator (CRI), an SSBRI, a layer indicator (LI), a rank indicator (RI), a Layer 1 reference signal receiving power (L1-RSRP) and a Layer 1 signal to interference plus noise ratio (L1-SINR).

Each CSI-ReportConfig further includes a codebook configuration, including a Type I/Type II/enhanced Type II codebook and a codebook restriction subset.

A downlink control information (DCI) CSI request signaling activates one triggering state. One triggering state may be associated with a plurality of aperiodic (AP)-CSIReportConfigs and one semi-persistent (SP)-CSI-ReportConfig.

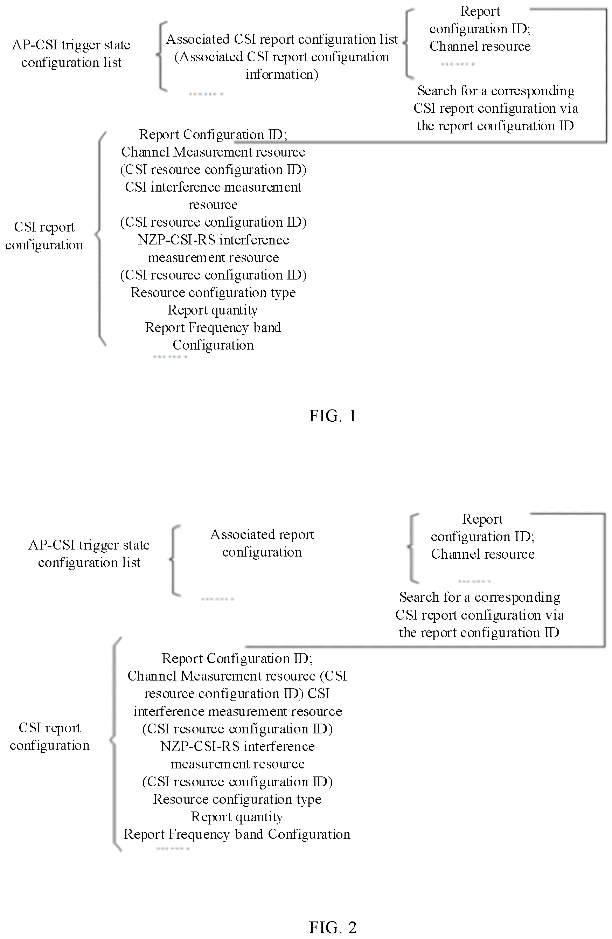

FIG. 1 is a first schematic flowchart of an AP-CSI measurement and report provided by an embodiment of the disclosure. As illustrated in FIG. 1, an AP-CSI report is only transmitted on a PUSCH.

FIG. 2 is a schematic flowchart of an SP-CSI measurement and report provided by an embodiment of the disclosure. As illustrated in FIG. 2, an SP-CSI report is transmitted over a PUSCH and a PUCCH. FIG. 2 mainly illustrates the transmission condition on the PUSCH.

The CSI report configuration may include the following fields:
a reportConfigId field, which indicates an identifier (ID) of a current CSI report configuration;
a resourcesForChannelMeasurement field, which indicates a NZP CSI-RS used for channel measurement;
a CSI-interference measurement (IM)-ResourcesForInterference field, which indicates an ID of a CSI-IM resource report for interference measurement;
a NZP-CSI-RS-ResourcesForInterference field, which indicates an ID of a NZP-CSI-RS resource report for interference measurement;
a reportConfigType field, which indicates a report configuration type, including periodic, AP and SP;
a reportQuantity field, which indicates a quantity included in the CSI report; and
a reportFreqConfiguration field, which indicates a measured frequency band corresponding to the CSI report.

In a CSI report mechanism, only the CSI reporting corresponding to one antenna unit can be reported when different TXRUs are switched off or on, and thus antenna pattern changes cannot be reflected. Although network energy consumption is reduced, it causes the reduction of network performance.

In discussions on network energy-saving technologies, a CSI sub-configuration report mechanism is supported. That is, a single CSI report configuration includes a plurality of CSI report sub-configurations, and each CSI report sub-configuration corresponds to one spatial adaptation pattern (antenna pattern). Antenna ports are associated with TxRUs through port virtualization. Therefore, the switching off of TxRUs not only cause changes in transmit power, but may also trigger the shutdown of antenna ports. The shutdown methods of different spatial elements create distinct spatial adaptation patterns or spatial element adaptation patterns.

For a CSI report configuration with L sub-configurations, the UE is supported to report N CSI frameworks within a single report instance. The N CSI frameworks are associated with N CSI report sub-configurations in the L sub-configurations, and each CSI framework corresponds to one CSI report sub-configuration, in which 1≤N≤L.

However, there is no explicit method to indicate the N CSI report sub-configurations in the L CSI report sub-configurations. Therefore, the present disclosure provides a method for sending a CSI report, a method for receiving a CSI report, an apparatus for sending a CSI report, an apparatus for receiving a CSI report and a storage medium. Part or all of CSI report sub-configurations configured on a network side are triggered through first information. A terminal supports a CSI report configuration with a plurality of sub-configurations, which enables it to report a plurality of CSI frameworks in one CSI report instance. Each CSI framework corresponds to one CSI sub-configuration, and each CSI sub-configuration corresponds to one antenna pattern. Therefore, when different TXRUs are switched off and on, channel state changes caused by changes in antenna patterns are well reflected, which achieves better link adaptation and better transmission performance, thereby achieving a trade-off between network energy consumption and network performance.

In the embodiments of the disclosure, the term "and/or" is used to describe relationships between associated objects, and it indicates three types of relationships. For example, "A and/or B" represents the following three relationships: A exists alone, A and B both exist, and B exists alone. Generally, the character "/" indicates that associated objects before and after the character "/" is in an "or" relationship.

In the embodiments of the disclosure, "a plurality of" refers to two or more, which is similar for other quantifiers.

The technical solutions provided by the embodiments of the disclosure are applicable to various systems, in particular to 5G systems, 5G Advanced systems, 6G systems and their future evolved systems. For example, the applicable systems include a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, an LTE-advanced (LTE-A) system, an universal mobile telecommunication system (UMTS), a worldwide interoperability for microwave access (WiMAX) system, and a 5G NR system. Each of these systems includes a terminal and a network device. The system may also include a core network portion, such as an evolved packet system (EPS), a 5G system (5GS), etc.

The terminal involved in the embodiments of the disclosure may be a device that provides voice and/or data connectivity to users, a handheld device with a wireless connectivity function, or other processing devices connected to a wireless modem. The terminal is referred to by different names in different systems. For example, in the 5GS, the terminal may be referred to as user equipment (UE). The wireless terminal may communicate with one or more core networks (CNs) via a radio access network (RAN). The wireless terminal may be a mobile terminal such as a cell phone (or "cellular" phone), or a computer having a mobile terminal, e.g., a portable, pocket-sized, handheld, computer-built or vehicle-mounted mobile device that is capable of exchanging language and/or data with the RAN. Examples of the wireless terminal include a personal communication service (PCS) phone, a cordless phone, a session initiated protocol (SIP) phone, a wireless local loop (WLL) station and a personal digital assistant (PDA). The wireless terminal may also be referred to as a system, a subscriber unit, a subscriber station, a mobile station, a mobile, a remote station, an access point, a remote terminal, an access terminal, a user terminal, a user agent, or a user device, which is not limited in the embodiments of the disclosure.

The network device involved in the embodiments of the disclosure may be a base station including a plurality of cells providing services to the terminal. Depending on the application scenario, the base station may be referred to as an access point or a device in the access network that communicates with the wireless terminal over one or more sectors on radio interfaces, or by other names. The network device may exchange received radio frames with internet protocol (IP) packets, acting as a router between the wireless terminal and a remaining portion of the access network. The remaining portion of the access network includes an IP communication network. The network device may also be used for management coordination of attributes of the radio interfaces. For example, the network device involved in the embodiments of the disclosure may be a base transceiver station (BTS) in the GSM system or the CDMA system, a NodeB (NB) in the WCDMA system, an evolutional NB (eNB) in the LTE system, a 5G gNB in a next generation system, a home evolved NB (HeNB), a relay node, a femto, a pico, etc., which is not limited in the embodiments of the disclosure. In some network structures, the network device may include a centralized unit (CU) and a plurality of distributed units (DUs), and the CU and the DUs are geographically separated.

The network device and the terminal each uses one or more antennas for multi-input multi-output (MIMO) transmission. MIMO transmission is categorized as single user-MIMO (SU-MIMO) and multiple user-MIMO (MU-MIMO). Depending on the form and quantity of combinations of antennas, MIMO transmission is divided into 2D-MIMO, 3D-MIMO, FD-MIMO and massive-MIMO. It may also involve diversity transmission, pre-coding transmission and beam-forming transmission.

The technical solutions in the embodiments of the disclosure are clearly and fully described with reference to the accompanying drawings. Obviously, the embodiments described below are only part of the embodiments of the disclosure, not all of them. Based on the embodiments of the disclosure, other embodiments obtained by those skilled in the art without inventive works all fall into the scope of protection of the disclosure.

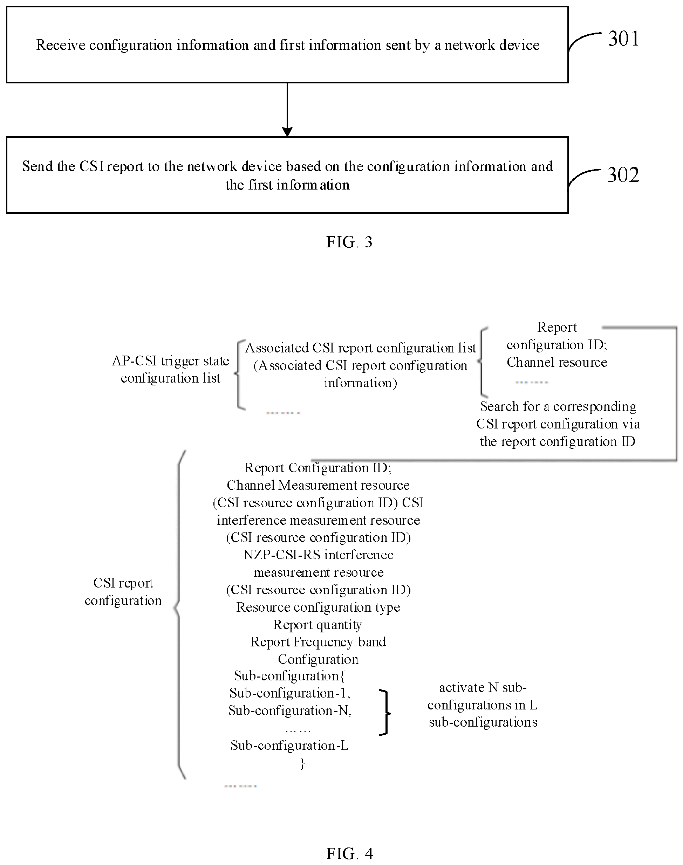

FIG. 3 is a schematic flowchart of a method for sending a CSI report provided by an embodiment of the disclosure. As illustrated in FIG. 3, an execution entity of the method is a terminal. The method at least includes the following steps.

At step 301, configuration information and first information sent by a network device are received.

At step 302, the CSI report is sent to the network device based on the configuration information and the first information.

In detail, the terminal receives the configuration information and the first information sent by the network device. The configuration information at least includes one or more CSI report sub-configurations, a trigger state configuration and an association relationship between the trigger state configuration and the CSI report sub-configuration. The first information is used to trigger part or all of the CSI report sub-configurations, for example, the first information is a trigger state activation/triggering message.

For example, the network side configures L CSI report sub-configurations, and the first information is used to trigger N CSI report sub-configurations in the L CSI report sub-configurations. In which N≤L, and both N and L are integers greater than zero.

The configuration information at least includes:
a CSI report sub-configuration. One CSI report sub-configuration corresponds to one spatial adaptation pattern (antenna pattern). Optionally, the CSI report sub-configuration includes at least one of the following: a spatial adaptation indicator to support CSI report enhancement based on spatial adaptation; antenna array size parameters n1-n2, used to determine a MIMO codebook subset; a number Ng of antenna panels to assist in determining a multi-panel MIMO codebook; an index of an activated antenna port corresponding to the spatial adaptation pattern; a power offset of CSI-RS relative to an SSB based on the spatial adaptation pattern; antenna array size information, including a number of horizontal dimensions N1 and a number of vertical dimensions N2 of a single-panel antenna array, or N1, N2 and Ng for a multi-panel antenna array; a port subset indicator; a PMI or a pre-coding matrix index; or a rank constraint; and
an associated configuration of the CSI report sub-configuration, including a trigger state configuration associated with the CSI report sub-configuration, such as a trigger state. The associated configuration of the CSI report sub-configuration indicates the association relationship between the CSI report sub-configuration and the trigger state configuration.

Optionally, the configuration further includes at least one of the following items:
a CSI report configuration. Optionally, the CSI report configuration includes at least one of the following: a CSI report configuration ID, a resource configuration for channel measurement, a resource configuration for interference measurement, a report configuration type, a report quality, a report frequency domain configuration, a channel measurement time domain constraint, an interference measurement time domain constraint, a codebook configuration, a group-based beam report, a CQI table, a sub-band size, a non-PMI port indicator, a PUSCH-based SP-CSI report parameter, an AP-CSI report parameter, a reporting quality, a shared channel measurement resource (CMR) configuration (sharing of channel measurement resources), a CSI reporting mode configuration, a quantity for single-TRP CSI mode 1, a period and an offset for CSI reporting, a PUCCH resource for CSI reporting, or a rank-8 port index parameter; or
an associated configuration of the CSI report configuration, including a trigger state configuration associated with the CSI report configuration, e.g., trigger state. It also includes an association relationship between the CSI report configuration and the trigger state. For example, each trigger state is associated with at least one CSI report configuration, and one CSI report configuration is associated with one trigger state, as shown in Table 1.

**Table 1: associated configurations of CSI report configurations**

| Trigger state | CSI-ReportConfig |
|---|---|
| Triggerstate-1 | CSI-ReportConfig-1 |
| Triggerstate-2 | CSI-ReportConfig-2 |
| Triggerstate-3 | CSI-ReportConfig-3 |

The terminal sends the CSI report to the network device based on the first information and the configuration information, and the network device receives the CSI report. Optionally, the CSI report includes an antenna pattern corresponding to a CSI report sub-configuration triggered by the first information.

According to the method for sending the CSI report provided by the embodiment of the disclosure, the part or all of the CSI report sub-configurations configured on a network side are triggered through the first information. The terminal supports a CSI report configuration with a plurality of sub-configurations, which enables it to report a plurality of CSI frameworks in one CSI report instance. Each CSI framework corresponds to one CSI sub-configuration, and each CSI sub-configuration corresponds to one antenna pattern. Therefore, when different TXRUs are switched off and on, channel state changes caused by changes in antenna patterns are well reflected, which achieves better link adaptation and better transmission performance, thereby achieving a trade-off between network energy consumption and network performance.

Optionally, the trigger state configuration includes a first trigger state configuration and a second trigger state configuration. The first trigger state configuration is associated with an entire set of CSI report sub-configurations supported by a network, and the second trigger state configuration is associated with a subset of the entire set of CSI report sub-configurations supported by the network.

In detail, the trigger state configuration is categorized into the first trigger state configuration and the second trigger state configuration.

The first trigger state configuration is a dedicated trigger state configuration, such as a dedicated trigger state (e.g., Trigger state=1). It corresponds to the entire set of CSI report sub-configurations supported by the network. For example, if the network configures L CSI report sub-configurations, Trigger state=1 corresponds to all the L CSI report sub-configurations.

The second trigger state configuration is a non-dedicated trigger state configuration, such as Trigger state>1. It corresponds to a subset of the entire set of CSI report sub-configurations supported by the network. For example, if the network configures L CSI report sub-configurations, Trigger state>1 corresponds to N different CSI report sub-configurations, in which N≤L.

According to the method for sending the CSI report provided by the embodiment of the disclosure, the part or all of the CSI report sub-configurations configured on the network side may be triggered by the activation/triggering message for the first trigger state configuration or the second trigger state configuration. The terminal supports a CSI report configuration with a plurality of sub-configurations, which enables it to report a plurality of CSI frameworks in one CSI report instance. Each CSI framework corresponds to one CSI sub-configuration, and each CSI sub-configuration corresponds to one antenna pattern. Therefore, when different TXRUs are switched off and on, channel state changes caused by changes in antenna patterns are well reflected, which achieves better link adaptation and better transmission performance, thereby achieving a trade-off between network energy consumption and network performance. Since the first trigger state configuration corresponds to the entire set of CSI report sub-configurations supported by the network, the terminal can determine the maximum quantity of CSI report sub-configurations.

Optionally, the association relationship between the trigger state configuration and the CSI report sub-configuration includes the following two relationships.
(1) The trigger state configuration is indirectly (implicitly) associated with the CSI report sub-configuration. The configuration information also includes the CSI report configuration, and the trigger state configuration is associated with the CSI report sub-configuration through the CSI report configuration.
   For example, one trigger state is associated with at least one CSI-ReportConfig, and one CSI-ReportConfig is associated with L sub-configuration parameters, where L represents the quantity of the entire set of sub-configurations supported by the network. That is, one trigger state is implicitly associated with L sub-configurations.
   FIG. 4 is a second schematic flowchart of an AP-CSI measurement and report provided by an embodiment of the disclosure. FIG. 4 illustrates the AP-CSI measurement and report process when a trigger state configuration is associated with a CSI report sub-configuration through a CSI report configuration. A network side configures L CSI report sub-configurations, and first information is used to trigger N CSI report sub-configurations in the L CSI report sub-configurations.
(2) The trigger state configuration is directly (explicitly) associated with the CSI report sub-configuration.

For example, one trigger state is associated with at least one CSI-ReportConfig and L sub-configuration parameters. That is, one trigger state is explicitly associated with L sub-configurations.

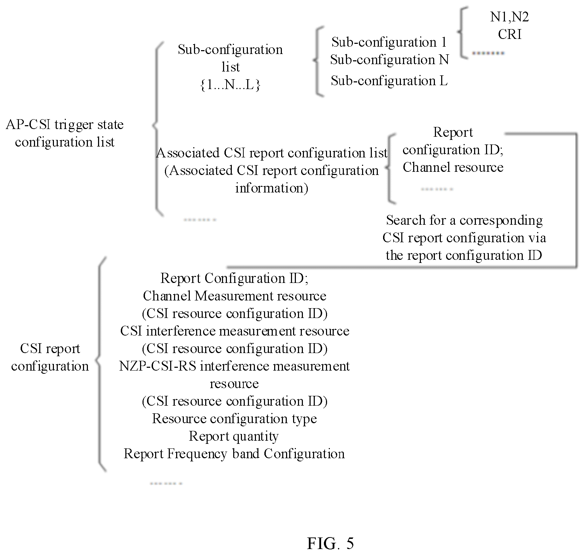

FIG. 5 is a third schematic flowchart of an AP-CSI measurement and report provided by an embodiment of the disclosure. FIG. 5 illustrates the AP-CSI measurement and report process when a trigger state configuration is independently associated with a CSI report sub-configuration and a CSI report configuration, respectively. A network side configures a CSI report sub-configuration list including L CSI report sub-configurations, and first information is used to trigger N CSI report sub-configurations in the L CSI report sub-configurations.

According to the method for sending the CSI report provided by the embodiment of the disclosure, the first information triggers the part or all of CSI report sub-configurations configured on the network side, and the relationship between the CSI report sub-configuration and the trigger state configuration is clarified. The terminal supports a CSI report configuration with a plurality of sub-configurations, which enables it to report a plurality of CSI frameworks in one CSI report instance. Each CSI framework corresponds to one CSI sub-configuration, and each CSI sub-configuration corresponds to one antenna pattern. Therefore, when different TXRUs are switched off and on, channel state changes caused by changes in antenna patterns are well reflected, which achieves better link adaptation and better transmission performance, thereby achieving a trade-off between network energy consumption and network performance.

Optionally, different trigger state configurations are associated with a subset of an entire set of CSI report sub-configurations supported by the network.

In detail, different trigger state configurations are associated with subsets of the entire set of CSI report sub-configurations supported by the network. For example, a trigger state configuration 1 is associated with N₁ CSI report sub-configurations, a trigger state configuration 2 is associated with N₂ CSI report sub-configurations, and a trigger state configuration X is associated with N_{X} CSI report sub-configurations. Therefore, CSI report sub-configurations associated with all trigger state configurations form the entire set of CSI report sub-configurations supported by the network together, i.e., N₁+N_{Z}+...+N_{X}=L.

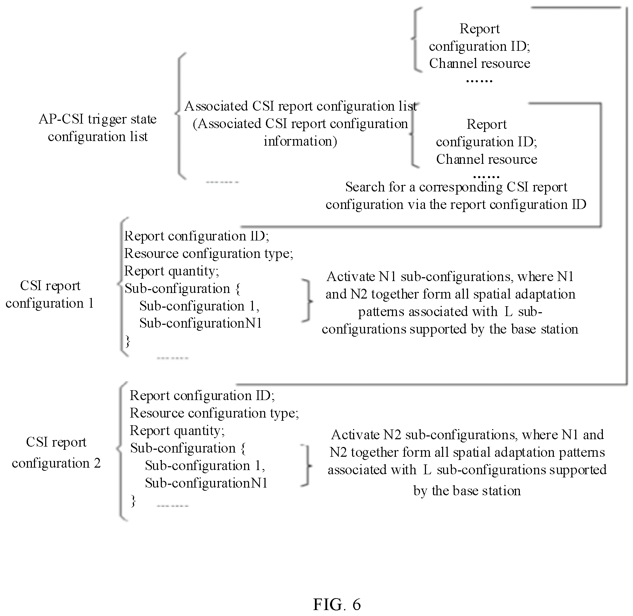

FIG. 6 is a fourth schematic flowchart of an AP-CSI measurement and report provided by an embodiment of the disclosure. FIG. 6 illustrates that a trigger state configuration is associated with a CSI report sub-configuration through a CSI report configuration, and different trigger state configurations are associated with subsets of an entire set of CSI report sub-configurations supported by a network. For example, a trigger state configuration 1 is associated with a CSI report configuration 1, which includes N₁ CSI report sub-configurations. First information may trigger N₁ CSI report sub-configurations. A trigger state configuration 2 is associated with a CSI report configuration 2, which includes N₂ CSI report sub-configurations. The first information may trigger N₂ CSI report sub-configurations. N₁+N₂=L.

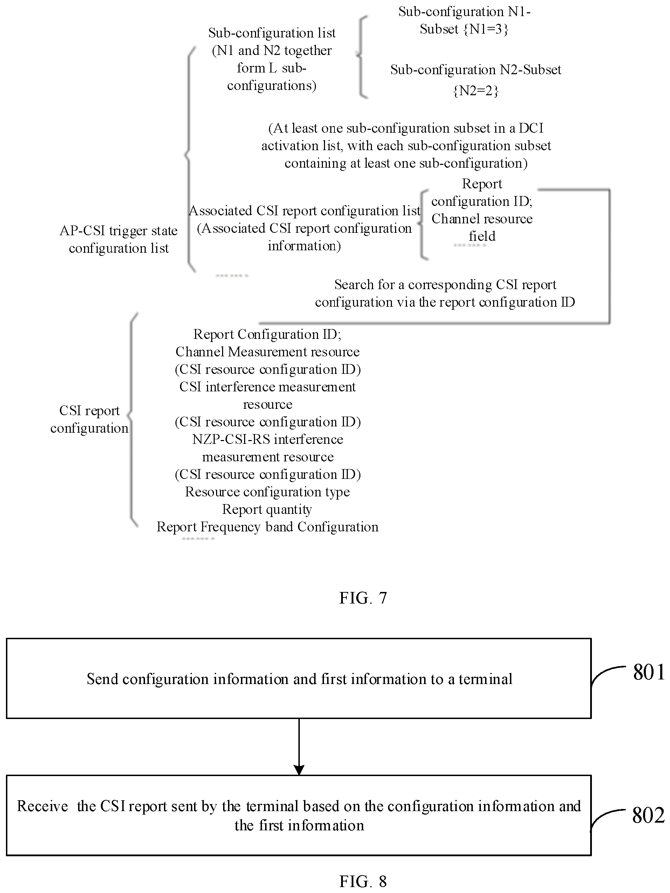

FIG. 7 is a fifth schematic flowchart of an AP-CSI measurement and report provided by an embodiment of the disclosure. In FIG. 7, a trigger state configuration is independently associated with a CSI report sub-configuration and a CSI report configuration, respectively, and different trigger state configurations are associated with subsets of an entire set of CSI report sub-configurations supported by a network. The network side configures a CSI report sub-configuration list, which includes two CSI report sub-configuration subsets. A sub-configuration N1-subset includes three CSI report sub-configurations, and first information may trigger the three CSI report sub-configurations. A sub-configuration N2-subset includes two CSI report sub-configurations, and the first information may trigger the two CSI report sub-configurations. In this case, the network side supports a total of five CSI report sub-configurations.

Optionally, different trigger state configurations are associated with an entire set of CSI report sub-configurations supported by the network.

In detail, the network side configures the entire set of CSI report sub-configurations, which includes L CSI report sub-configurations. Each trigger state configuration is associated with L CSI report sub-configurations.

According to the method for sending the CSI report provided by the embodiment of the disclosure, the part or all of the CSI report sub-configurations configured on the network side may be triggered by the first information, and the relationship between the CSI report sub-configuration and the trigger state configuration is clarified. A terminal supports a CSI report configuration with a plurality of sub-configurations, which enables it to report a plurality of CSI frameworks in one CSI report instance. Each CSI framework corresponds to one CSI sub-configuration, and each CSI sub-configuration corresponds to one antenna pattern. Therefore, when different TXRUs are switched off and on, channel state changes caused by changes in antenna patterns are well reflected, which achieves better link adaptation and better transmission performance, thereby achieving a trade-off between network energy consumption and network performance.

Optionally, the association relationship between the CSI report sub-configuration and the trigger state configuration is indicated by a code point of a dynamic signaling sent by a network device.

Optionally, the trigger state configuration and the CSI report sub-configuration are configured via a high-layer signaling.

In detail, the high-layer signaling configures the trigger state configuration and the CSI report sub-configuration.

For example, the high-layer signaling configures CSI report sub-configurations [N₁, N₂, N₃,...N_{T}] and trigger state configurations [trigger_state_1, trigger_state_2, trigger_state_3,... trigger_state_T].

Optionally, the code point of the dynamic signaling indicates a trigger_state_X, a code point X corresponds to a trigger state configuration X, which further corresponds to N_{X} CSI report sub-configurations.

Optionally, the code point of the dynamic signaling indicates the trigger_state_X, the code point X corresponds to the trigger state configuration X, which corresponds to a CSI report configuration X, and the CSI report configuration X corresponds to the N_{X} CSI report sub-configurations.

Optionally, the first information is included in an RRC signaling and/or a dynamic signaling sent by the network device.

In detail, the first information is carried by the RRC signaling and/or the dynamic signaling sent by the network device. Optionally, the dynamic signaling may be a dynamic signaling indicated by DCI and/or a medium access control control element (MAC CE).

The dynamic signaling may include: reusing an existing DCI bit field, such as a CSI request bit field; configuring a new DCI bit field; or configuring a new MAC-CE information bit indicator.

Taking to reusing the existing DCI bit field as an example, at least one of the following implementations is included.
(1) A bit field for activating/indicating a trigger state configuration in the DCI occupies N bits. N1 bits are used to activate/indicate the trigger state configuration, N2 bits are used to activate/indicate a CSI report sub-configuration, and N1+N2=N.
   For Rel-18 UE, by examining a CSI report configuration, it can determine whether the CSI report configuration contains configurations associated with CSI report sub-configurations. Upon receiving the CSI report configuration, it determines whether bits within the DCI are used for multiple CSI report sub-configurations.
   For Rel-17 UE, it does not configure any CSI report sub-configuration, and only implements legacy DCI reception and CSI reporting.
(2) DCI-1 at least includes an N-bit field and an M-bit field. The legacy N-bit field is used to activate/indicate a trigger state configuration, while the newly defined M-bit field is used to activate/indicate a CSI report sub-configuration.
(3) DCI-1 at least includes an N-bit field, which is used to activate/indicate a trigger state configuration, and DCI-2 at least includes an M-bit field, which is used to activate/indicate a CSI report sub-configuration.

Optionally, the first information is further used to indicate a number and/or an index of part of the CSI report sub-configurations.

Optionally, an RRC signaling and/or a dynamic signaling may also be used to indicate a number and/or an index of a CSI reporting sub-configuration to be reported by the UE.

Similarly, the configuration information may also be carried via an RRC signaling and/or a dynamic signaling.

According to the method for sending the CSI report provided by the embodiment of the disclosure, the part or all of the CSI report sub-configurations configured on the network side may be triggered by the first information, and the relationship between the CSI report sub-configuration and the trigger state configuration is clarified. The terminal supports a CSI report configuration with a plurality of sub-configurations, which enables it to report a plurality of CSI frameworks in one CSI report instance. Each CSI framework corresponds to one CSI sub-configuration, and each CSI sub-configuration corresponds to one antenna pattern. Therefore, when different TXRUs are switched off and on, channel state changes caused by changes in antenna patterns are well reflected, which achieves better link adaptation and better transmission performance, thereby achieving a trade-off between network energy consumption and network performance.

FIG. 8 is a schematic flowchart of a method for receiving a CSI report provided by an embodiment of the disclosure. As illustrated in FIG. 8, an execution entity of the method is a network device, such as a base station. The method at least includes the following steps.

At step 801, configuration information and first information are sent to a terminal.

At step 802, the CSI report sent by the terminal based on the configuration information and the first information is received.

The configuration information includes one or more CSI report sub-configurations, a trigger state configuration and an association relationship between the trigger state configuration and the CSI report sub-configuration, and the first information is used to trigger part or all of the CSI report sub-configurations.

In detail, the network device sends the configuration information and the first information to the terminal. The configuration information at least includes the one or more CSI report sub-configurations, the trigger state configuration, and the association relationship between the trigger state configuration and the CSI report sub-configuration. The first information is used to trigger the part or all of the CSI report sub-configurations, the first information may be a trigger state activation/triggering message.

For example, the network side configures L CSI report sub-configurations, and the first information is used to trigger N CSI report sub-configurations in the L CSI report sub-configurations. N≤L, and both N and L are integers greater than zero.

The configuration information at least includes:
a CSI report sub-configuration. One CSI report sub-configuration corresponds to one spatial adaptation pattern (antenna pattern). Optionally, the CSI report sub-configuration includes at least one of the following: a spatial adaptation indicator to support CSI report enhancement based on spatial adaptation; antenna array size parameters n1-n2, used to determine a MIMO codebook subset; a number Ng of antenna panels to assist in determining a multi-panel MIMO codebook; an index of an activated antenna port corresponding to the spatial adaptation pattern; a power offset of CSI-RS relative to an SSB based on the spatial adaptation pattern; antenna array size information, including a number of horizontal dimensions N1 and a number of vertical dimensions N2 of a single-panel antenna array, or N1, N2 and Ng for a multi-panel antenna array; a port subset indicator; a PMI or a pre-coding matrix index; or a rank constraint; and
an associated configuration of the CSI report sub-configuration, including a trigger state configuration associated with the CSI report sub-configuration, such as a trigger state. The associated configuration of the CSI report sub-configuration indicates the association relationship between the CSI report sub-configuration and the trigger state configuration.

Optionally, the configuration further includes at least one of the following items:
a CSI report configuration. Optionally, the CSI report configuration includes at least one of the following: a CSI report configuration ID, a resource configuration for channel measurement, a resource configuration for interference measurement, a report configuration type, a report quality, a report frequency domain configuration, a channel measurement time domain constraint, an interference measurement time domain constraint, a codebook configuration, a group-based beam report, a CQI table, a sub-band size, a non-PMI port indicator, a PUSCH-based SP-CSI report parameter, an AP-CSI report parameter, a reporting quality, a shared CMR configuration (sharing of channel measurement resources), a CSI reporting mode configuration, a quantity for single-TRP CSI mode 1, a period and an offset for CSI reporting, a PUCCH resource for CSI reporting, or a rank-8 port index parameter; or
an associated configuration of the CSI report configuration, including a trigger state configuration associated with the CSI report configuration, e.g., trigger state. It also includes an association relationship between the CSI report configuration and the trigger state. For example, each trigger state is associated with at least one CSI report configuration, and one CSI report configuration is associated with one trigger state.

The terminal sends the CSI report to the network device based on the first information and the configuration information, and the network device receives the CSI report. Optionally, the CSI report includes an antenna pattern corresponding to a CSI report sub-configuration triggered by the first information.

According to the method for sending the CSI report provided by the embodiment of the disclosure, the part or all of the CSI report sub-configurations configured on the network side may be triggered by the first information. The terminal supports a CSI report configuration with a plurality of sub-configurations, which enables it to report a plurality of CSI frameworks in one CSI report instance. Each CSI framework corresponds to one CSI sub-configuration, and each CSI sub-configuration corresponds to one antenna pattern. Therefore, when different TXRUs are switched off and on, channel state changes caused by changes in antenna patterns are well reflected, which achieves better link adaptation and better transmission performance, thereby achieving a trade-off between network energy consumption and network performance.

Optionally, the trigger state configuration includes a first trigger state configuration and a second trigger state configuration. The first trigger state configuration is associated with an entire set of CSI report sub-configurations supported by a network, and the second trigger state configuration is associated with a subset of the entire set of CSI report sub-configurations supported by the network.

In detail, the trigger state configuration is categorized into the first trigger state configuration and the second trigger state configuration.

The first trigger state configuration is a dedicated trigger state configuration, such as a dedicated trigger state (e.g., Trigger state=1). It corresponds to the entire set of CSI report sub-configurations supported by the network. For example, if the network configures L CSI report sub-configurations, Trigger state=1 corresponds to the L CSI report sub-configurations.

The second trigger state configuration is a non-dedicated trigger state configuration, such as Trigger state>1. It corresponds to a subset of the entire set of CSI report sub-configurations supported by the network. For example, if the network configures L CSI report sub-configurations, Trigger state>1 corresponds to N different CSI report sub-configurations. N≤L.

According to the method for receiving the CSI report provided by the embodiment of the disclosure, the part or all of the CSI report sub-configurations configured on the network side may be triggered by the activation/triggering message for the first trigger state configuration or the second trigger state configuration. The terminal supports a CSI report configuration with a plurality of sub-configurations, which enables it to report a plurality of CSI frameworks in one CSI report instance. Each CSI framework corresponds to one CSI sub-configuration, and each CSI sub-configuration corresponds to one antenna pattern. Therefore, when different TXRUs are switched off and on, channel state changes caused by changes in antenna patterns are well reflected, which achieves better link adaptation and better transmission performance, thereby achieving a trade-off between network energy consumption and network performance. Since the first trigger state configuration corresponds to the entire set of CSI report sub-configurations supported by the network, the terminal can determine the maximum quantity of CSI report sub-configurations.

Optionally, the association relationship between the trigger state configuration and the CSI report sub-configuration includes the following two relationships.
(1) The trigger state configuration is indirectly (implicitly) associated with the CSI report sub-configuration. The configuration information also includes the CSI report configuration, and the trigger state configuration is associated with the CSI report sub-configuration through the CSI report configuration.
(2) The trigger state configuration is directly (explicitly) associated with the CSI report sub-configuration.

For example, one trigger state is associated with at least one CSI-ReportConfig and L sub-configuration parameters. That is, one trigger state is explicitly associated with L sub-configurations.

According to the method for receiving the CSI report provided by the embodiment of the disclosure, the first information triggers the part or all of CSI report sub-configurations configured on the network side, and the relationship between the CSI report sub-configuration and the trigger state configuration is clarified. The terminal supports a CSI report configuration with a plurality of sub-configurations, which enables it to report a plurality of CSI frameworks in one CSI report instance. Each CSI framework corresponds to one CSI sub-configuration, and each CSI sub-configuration corresponds to one antenna pattern. Therefore, when different TXRUs are switched off and on, channel state changes caused by changes in antenna patterns are well reflected, which achieves better link adaptation and better transmission performance, thereby achieving a trade-off between network energy consumption and network performance.

Optionally, different trigger state configurations are associated with subsets of an entire set of CSI report sub-configurations supported by the network.

In detail, different trigger state configurations are associated with the subsets of the entire set of CSI report sub-configurations supported by the network. For example, a trigger state configuration 1 is associated with N₁ CSI report sub-configurations, a trigger state configuration 2 is associated with N₂ CSI report sub-configurations, and a trigger state configuration X is associated with N_{X} CSI report sub-configurations. Therefore, CSI report sub-configurations associated with all trigger state configurations form the entire set of CSI report sub-configurations supported by the network together, i.e., N₁+N_{Z}+...+N_{X}=L.

Optionally, different trigger state configurations are associated with an entire set of CSI report sub-configurations supported by the network.

In detail, the network side configures the entire set of CSI report sub-configurations, which includes L CSI report sub-configurations. Each trigger state configuration is associated with L CSI report sub-configurations.

According to the method for receiving the CSI report provided by the embodiment of the disclosure, the part or all of the CSI report sub-configurations configured on the network side may be triggered by the first information, and the relationship between the CSI report sub-configuration and the trigger state configuration is clarified. A terminal supports a CSI report configuration with a plurality of sub-configurations, which enables it to report a plurality of CSI frameworks in one CSI report instance. Each CSI framework corresponds to one CSI sub-configuration, and each CSI sub-configuration corresponds to one antenna pattern. Therefore, when different TXRUs are switched off and on, channel state changes caused by changes in antenna patterns are well reflected, which achieves better link adaptation and better transmission performance, thereby achieving a trade-off between network energy consumption and network performance.

Optionally, the association relationship between the trigger state configuration and the CSI report sub-configuration is indicated by a code point of a dynamic signaling sent by the network device.

Optionally, the trigger state configuration and the CSI report sub-configuration are configured via a high-layer signaling.

In detail, the high-layer signaling configures the trigger state configuration and the CSI report sub-configuration.

For example, the high-layer signaling configures CSI report sub-configurations [N₁, N₂, N₃,...N_{T}] and trigger state configurations [trigger_state_1, trigger_state_2, trigger_state_3,... trigger_state_T].

Optionally, the code point of the dynamic signaling indicates a trigger_state_X, a code point X corresponds to a trigger state configuration X, which further corresponds to N_{X} CSI report sub-configurations.

Optionally, the code point of the dynamic signaling indicates the trigger_state_X, the code point X corresponds to the trigger state configuration X, which corresponds to a CSI report configuration X, and the CSI report configuration X corresponds to the N_{X} CSI report sub-configurations.

Optionally, the first information is included in an RRC signaling and/or a dynamic signaling sent by the network device.

In detail, the first information is carried by the RRC signaling and/or the dynamic signaling sent by the network device. Optionally, the dynamic signaling may be a dynamic signaling indicated by DCI and/or an MAC CE.

The dynamic signaling may include: reusing an existing DCI bit field, such as a CSI request bit field; configuring a new DCI bit field; or configuring a new MAC-CE information bit indicator.

Taking to reusing the existing DCI bit field as an example, at least one of the following implementations is included.
(1) A bit field for activating/indicating a trigger state configuration in the DCI occupies N bits. N1 bits are used to activate/indicate the trigger state configuration, N2 bits are used to activate/indicate a CSI report sub-configuration, and N1+N2=N.
   For Rel-18 UE, by examining a CSI report configuration, it can determine whether the CSI report configuration contains configurations associated with CSI report sub-configurations. Upon receiving the CSI report configuration, it determines whether bits within the DCI are used for multiple CSI report sub-configurations.
   For Rel-17 UE, it does not configure any CSI report sub-configuration, and only implements legacy DCI reception and CSI reporting.
(2) DCI-1 at least includes an N-bit field and an M-bit field. The legacy N-bit field is used to activate/indicate a trigger state configuration, while the newly defined M-bit field is used to activate/indicate a CSI report sub-configuration.
(3) DCI-1 at least includes an N-bit field, which is used to activate/indicate a trigger state configuration, and DCI-2 at least includes an M-bit field, which is used to activate/indicate a CSI report sub-configuration.

Optionally, the first information is further used to indicate a number and/or an index of part of the CSI report sub-configurations.

Optionally, an RRC signaling and/or a dynamic signaling may also be used to indicate a number and/or an index of a CSI reporting sub-configuration to be reported by the UE.

Similarly, the configuration information may also be carried via an RRC signaling and/or a dynamic signaling.

According to the method for receiving the CSI report provided by the embodiment of the disclosure, the first information triggers the part or all of CSI report sub-configurations configured on the network side, and the relationship between the CSI report sub-configuration and the trigger state configuration is clarified. The terminal supports a CSI report configuration with a plurality of sub-configurations, which enables it to report a plurality of CSI frameworks in one CSI report instance. Each CSI framework corresponds to one CSI sub-configuration, and each CSI sub-configuration corresponds to one antenna pattern. Therefore, when different TXRUs are switched off and on, channel state changes caused by changes in antenna patterns are well reflected, which achieves better link adaptation and better transmission performance, thereby achieving a trade-off between network energy consumption and network performance.

Several examples are illustrated below to further explain the technical solutions of the embodiments of the disclosure.

Example 1. Each trigger state configuration is associated with L different CSI report sub-configurations, and an activating signaling for each trigger state activates N different CSI report sub-configurations. The CSI measurement and reporting process includes the following steps.

At step 1(1), a base station configures a CSI report configuration, a CSI report sub-configuration, and an associated configuration of the CSI report configuration and/or the CSI report sub-configuration via an RRC signaling.

The CSI report configuration includes at least one of the following: a CSI report configuration ID, a resource configuration for channel measurement, a resource configuration for interference measurement, a report configuration type, a report quality, a report frequency domain configuration, a channel measurement time domain constraint, an interference measurement time domain constraint, a codebook configuration, a group-based beam report, a CQI table, a sub-band size, a non-PMI port indicator, a PUSCH-based SP-CSI report parameter, an AP-CSI report parameter, a reporting quality, a shared CMR configuration (sharing of channel measurement resources), a CSI reporting mode configuration, a quantity for single-TRP CSI mode 1, a period and an offset for CSI reporting, a PUCCH resource for CSI reporting, or a rank-8 port index parameter;
a CSI report sub-configuration, which is associated with different antenna patterns. The CSI report sub-configuration includes at least one of the following: a spatial adaptation indicator to support CSI report enhancement based on spatial adaptation; antenna array size parameters n1-n2, used to determine a MIMO codebook subset; a number Ng of antenna panels to assist in determining a multi-panel MIMO codebook; an index of an activated antenna port corresponding to the spatial adaptation pattern; a power offset of CSI-RS relative to an SSB based on the spatial adaptation pattern; antenna array size information, including a number of horizontal dimensions N1 and a number of vertical dimensions N2 of a single-panel antenna array, or N1, N2 and Ng for a multi-panel antenna array; a port subset indicator; a PMI or a pre-coding matrix index; or a rank constraint;
an associated configuration of the CSI report configuration. It is used to represent an indication signaling of the CSI report configuration, and includes a trigger state configuration associated with the CSI report configuration, e.g., trigger state, as shown in Table 1; and
an associated configuration of the CSI report sub-configuration, including at least one of the following: a trigger state configuration associated with the CSI report sub-configuration (e.g., trigger state), or a CSI report configuration associated with the CSI report sub-configuration (e.g., CSI-ReportConfig).

For the trigger state, there are at least two implementations.
1. One trigger state is associated with at least one CSI-ReportConfig, and each CSI-ReportConfig is associated with L sub-configuration parameters, where L represents a parameter of an entire set of sub-configurations supported by the network. That is, one trigger state is implicitly associated with L sub-configurations.
2. One trigger state is associated with at least one CSI-ReportConfig and L sub-configuration parameters. That is, one trigger state is explicitly associated with L sub-configurations.

Details can refer to Table 2 and Table 3.

**Table 2: associated configurations of CSI report sub-configurations**

| Trigger state | CSI-ReportConfig | CSI sub-configuration | DCI trigger | Code point |
|---|---|---|---|---|
| Trigger state | CSI-ReportConfig | CSI sub-configuration-L (L represents a parameter of an entire set of sub-configurations supported by the network) | DCI triggers N sub-configurations (e.g., N=2) | 00 |
| | | CSI sub-configuration-L | DCI triggers N sub-configurations (e.g., N=3) | 01 |
| | | CSI sub-configuration-L | DCI triggers N sub-configurations (e.g., N=4) | 11 |

**Table 3: associated configurations of CSI report sub-configurations**

| Trigger state | CSI sub-configuration | DCI trigger | Code point |
|---|---|---|---|
| Trigger state | CSI sub-configuration-L (L represents a parameter of an entire set of sub-configurations supported by the network, L=4) | DCI triggers N sub-configurations (e.g., N=2) | 00 |
| | CSI sub-configuration-L (L=5) | DCI triggers N sub-configurations (e.g., N=3) | 01 |
| | CSI sub-configuration-L (L=6) | DCI triggers N sub-configurations (e.g., N=4) | 11 |

At step 1(2), the base station configures a CSI report sub-configuration transmission and/or activates/indicates a CSI report sub-configuration transmission through a dynamic signaling.

The dynamic signaling includes a dynamic signaling indicated by DCI and/or a MAC-CE, and is used to indicate CSI report sub-configuration information. The dynamic signaling includes at least one of: reusing an existing DCI bit field, such as a CSI request bit field, configuring a new DCI bit field, or configuring a new MAC-CE information bit indicator. If it is indicated by DCI, taking to reuse the existing DCI bit field as an example, at least one of the following implementations is included.
(1) A bit field for activating/indicating a trigger state configuration in the DCI occupies N bits. N1 bits are used to activate/indicate the trigger state configuration, N2 bits are used to activate/indicate a CSI report sub-configuration, and N1+N2=N.
   For Rel-18 UE, by examining a CSI-ReportConfig, it can determine whether the CSI-ReportConfig contains configurations associated with CSI report sub-configurations. Upon receiving the CSI-ReportConfig, it determines whether bits within the DCI are used for multiple CSI report sub-configurations.
   For Rel-17 UE, it does not configure any CSI report sub-configuration, and only implements legacy DCI reception and CSI reporting.
(2) DCI-1 at least includes an N-bit field and an M-bit field. The legacy N-bit field is used to activate/indicate a trigger state configuration, while the newly defined M-bit field is used to activate/indicate a CSI report sub-configuration.
(3) DCI-1 at least includes an N-bit field, which is used to activate/indicate a trigger state configuration, and DCI-2 at least includes an M-bit field, which is used to activate/indicate a sub-configuration.

The activation/indication of sub-configuration via the dynamic signaling includes at least one of the following: indicating a number N of CSI report sub-configurations via DCI; or indicating an index of a CSI report sub-configuration via DCI, which refers to Table 4.

**Table 4: indexes of of CSI report sub-configurations indicated by DCI**

| Sub-configuration index | Sub-configuration | L=5 |
|---|---|---|
| 0 | {1,2,3} | |
| 1 | {1, 2, 3, 4,5} | |
| 2 | {1} | |

At step 1(3), the base station receives a CSI report corresponding to CSI report sub-configuration information at a first time.

The first time includes at least one of the following: a first moment, a first time window, a second moment satisfying a first rule, or a second time window satisfying a second rule. The first moment may be a first radio frame, a first sub-frame, a first slot or a first symbol. The first time window includes a duration between a first reference moment and a second reference moment. The reference moment may include a moment relative to a first signal/channel. The first rule may be taking the maximum value, the minimum value or an average value. The second rule may be that a starting moment is greater than a first target moment, the starting moment is less than a second target moment, an end moment is greater than a third target moment, or the end moment is less than the third target moment. The target moment may be a transmission moment of the first target signal/channel.

For example, the base station receives a plurality of CSI reports corresponding to multiple CSI report sub-configurations, simultaneously. For example, the base station receives a CSI report corresponding to a sub-configuration with the minimum reporting delay among the CSI report sub-configurations. As another example, the base station receives a CSI report corresponding to a sub-configuration with the maximum reporting delay among the CSI report sub-configurations. Or, the base station receives a plurality of CSI reports corresponding to multiple CSI report sub-configurations within a target time window. Or, the base station receives a plurality of CSI reports corresponding to all the CSI report sub-configurations that meet a CSI reporting time requirement.

The UE receives relevant configuration information sent by the base station and reports antenna patterns corresponding to the CSI report sub-configurations based on the configuration information and the dynamic signaling.

Example 2. Each trigger state configuration is associated with L different CSI report sub-configurations. An activating signaling for each trigger state activates N different CSI report sub-configurations. The CSI measurement and reporting process includes the following steps.

At step 2(1), a base station configures a CSI report configuration, a CSI report sub-configuration, and an associated configuration of the CSI report configuration and/or the CSI report sub-configuration via an RRC signaling.

Descriptions of the CSI report configuration, the CSI report sub-configuration and the associated configuration of the CSI report configuration can refer to Example 1.

The associated configuration of the CSI report sub-configuration include at least one of the following: a trigger state configuration associated with the CSI report sub-configuration (e.g., trigger state), or a CSI report configuration associated with the CSI report sub-configuration (e.g., CSI-ReportConfig).

For the trigger state, there are at least two implementations.
1. One trigger state is associated with at least one CSI-ReportConfig, and each CSI-ReportConfig is associated with N sub-configuration parameters, where N represents a quantity of a subset of parameters of sub-configurations supported by the network. That is, a plurality of trigger states are implicitly associated with N sub-configurations, and they collectively constitute an entire set of parameters of sub-configurations supported by the network, i.e., L sub-configurations.
2. One trigger state is associated with at least one CSI-ReportConfig and N sub-configuration parameters. That is, a plurality of trigger states are explicitly associated with N sub-configurations, and they collectively constitute an entire set of parameters of sub-configurations supported by the network, i.e., L sub-configurations.

Details can refer to Table 5 and Table 6.

**Table 5: associated configurations of CSI report sub-configurations**

| Trigger state | CSI-ReportConfig | CSI sub-configuration | DCI trigger | code point |
|---|---|---|---|---|
| Trigger state | CSI-ReportConfig | CSI sub-configuration-N (N represents a quantity of a subset of sub-configurations supported by the network) | DCI triggers N sub-configurations (e.g., N=2) | 00 |
| | | CSI sub-configuration-N | DCI triggers N sub-configurations (e.g., N=3) | 01 |
| | | CSI sub-configuration-N | DCI triggers N sub-configurations (e.g., N=4) | 11 |

**Table 6: associated configurations of CSI report sub-configurations**

| Trigger state | CSI sub-configuration | DCI trigger | code point |
|---|---|---|---|
| Trigger state | CSI sub-configuration-N (N=4) | DCI trigger | 00 |
| | CSI sub-configuration-L (N=5) | DCI trigger | 01 |
| | CSI sub-configuration-L (N=6) | DCI trigger | 11 |

At step 2(2), the base station configures and/or activates/indicates a CSI report sub-configuration transmission through a dynamic signaling, which can refer to Example 1.

At step 2(3), the base station receives a CSI report corresponding to CSI sub-configuration information at a first time, which can refer to Example 1.

Example 3. A dedicated trigger state configuration (trigger state=1) is associated with L different CSI report sub-configurations, while a non-dedicated trigger state configuration (trigger state>1) is associated with N different CSI report sub-configurations. The CSI measurement and reporting process includes the following steps.

At step 3(1), a base station configures a CSI report configuration, a CSI report sub-configuration, and an associated configuration of the CSI report configuration and/or the CSI report sub-configuration via an RRC signaling.

Descriptions of the CSI report configuration, the CSI report sub-configuration and the associated configuration of the CSI report configuration can refer to Example 1.

The associated configuration of the CSI report sub-configuration include at least one of the following: a trigger state configuration associated with the CSI report sub-configuration (e.g., trigger state), or a CSI report configuration associated with the CSI report sub-configuration (e.g., CSI-ReportConfig).

For the trigger state, there are at least two implementations.
(1) One trigger state is associated with at least one CSI-ReportConfig. One type of CSI-ReportConfig is associated with L sub-configuration parameters, where L represents a quantity of an entire set of sub-configuration parameters supported by the network. Another type of CSI-ReportConfig is associated with N sub-configuration parameters, where N represents a quantity of a subset of sub-configuration parameters supported by the network. That is, one trigger state is implicitly associated with either N or L sub-configurations.
(2) One trigger state is associated with at least one of two types of sub-configurations. One type is associated with a combination of L sub-configurations, where L represents a quantity of an entire set of sub-configuration parameters supported by the network. The other type is associated with a combination of N sub-configurations, where N≤L. One trigger state is implicitly associated with N sub-configurations and/or L sub-configurations.

Details can refer to Table 7 and Table 8.

**Table 7: associated configurations of CSI report sub-Configurations**

| Trigger state | CSI-ReportConfig | CSI sub-configuration | DCI trigger | Code point |
|---|---|---|---|---|
| Trigger state | CSI-ReportConfig | CSI sub-configuration-L (L represents a quantity of an entire set of sub-configuration parameters supported by the network) | DCI triggers L sub-configurations | 00 |
| | | CSI sub-configuration-N | DCI triggers N sub-configurations (e.g., N=3) | 01 |
| | | CSI sub-configuration-N | DCI triggers N sub-configurations (e.g., N=4) | 11 |

**Table 8: associated configurations of CSI report sub-Configurations**

| Trigger state | CSI sub-configuration | DCI trigger | Code point |
|---|---|---|---|
| Trigger state | CSI sub-configuration-L | DCI trigger | 00 |
| | CSI sub-configuration-L (N=5) | DCI trigger | 01 |
| | CSI sub-configuration-L (N=6) | DCI trigger | 11 |

At step 3(2), the base station configures and/or activates/indicates a CSI report sub-configuration transmission through a dynamic signaling, which can refer to Example 1.

At step 3(3), the base station receives a CSI report corresponding to CSI sub-configuration information at a first time, which can refer to Example 1.

### Example 4

A high-layer signaling configures CSI report sub-configurations [N₁, N₂, N₃,...N_{T}] and trigger states [trigger_state_1, trigger_state_2, trigger _state_3,... trigger_state_T]. Each code point of a dynamic signaling indicates a trigger state. A code point X corresponds to a trigger_state_X, which further corresponds to a N_{X} sub-configuration within each CSI report configuration.

Details can refer to Table 9.

**Table 9: CSI report sub-configurations and trigger states configured by high-layer signaling**

| | | | |
|---|---|---|---|
| Group 1 L=2 | Trigger state 1 | N=1or{1} | ReportConfig1 {sub-config_1, sub-config_2} |
| | Trigger state2 | N=2or{1,2} | ReportConfig1 {sub-config_1, sub-config_2} |
| Group2 L=3 | Trigger state3 | N=1or{1} | ReportConfig2 {sub-config_1, sub-config_2, sub-config_3} |
| | Trigger state4 | N=2or{2,3} | ReportConfig2 {sub-config_1, sub-config_2, sub-config_3} |
| | Trigger state5 | N=3or{1,2,3} | ReportConfig2{sub-config_1, sub-config_2, sub-config_3} |

Example 5. A high-layer signaling configures L CSI report sub-configurations. The L CSI report sub-configurations constitute an entire set of sub-configurations corresponding to all the CSIreportConfigs. One CSIreportConfig activates/indicates N report sub-configurations. The CSIreprotconfig activates/indicates N report sub-configurations based on a dynamic signaling or an RRC signaling, either implicitly or explicitly.

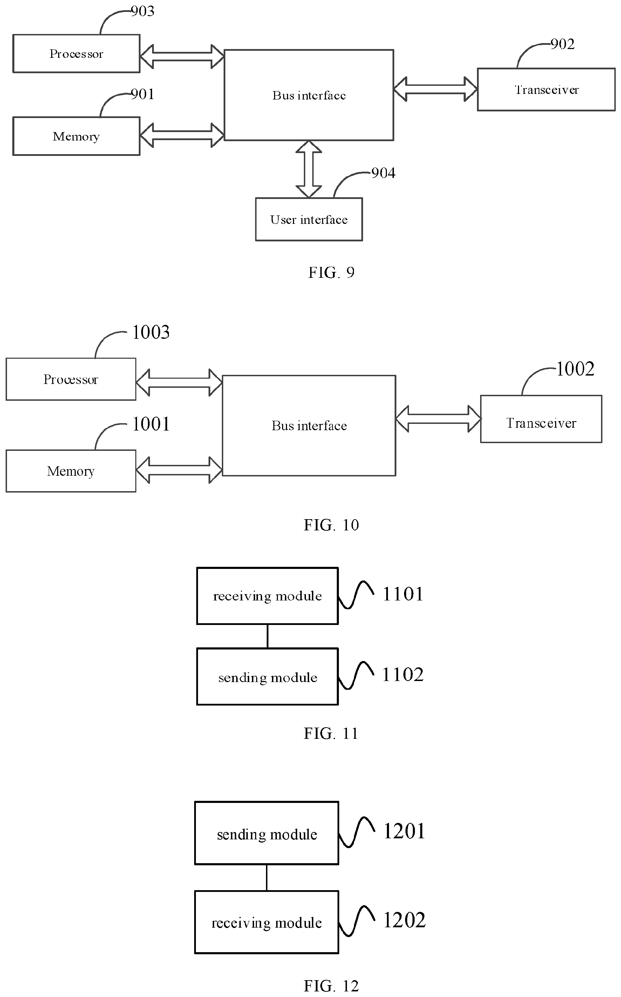

FIG. 9 is a schematic structural diagram of a terminal provided by an embodiment of the disclosure. As illustrated in FIG. 9, the terminal includes: a memory 901, a transceiver 902 and a processor 903.

The memory 901 is configured to store a computer program, and the transceiver 902 is configured to send and receive data under the control of the processor 903.

In detail, the transceiver 902 is controlled by the processor 903 to send and receive data.

In FIG. 9, a bus architecture may include any number of interconnected buses and bridges, specifically one or more processors represented by the processor 903 and various circuits of memories represented by the memory 901 are linked together. The bus architecture may also link peripheral devices, voltage regulators, and various other circuits such as power management circuits together, which are well known in the art and will not be further described herein. There is a bus interface that provides an interface. The transceiver 902 may include a plurality of elements, such as a transmitter and a receiver, for communicating with other devices over transmission mediums. The transmission mediums include wireless channels, wired channels, fiber optic cables, etc. For different UEs, a user interface 904 may also be an interface capable of externally and internally connecting desired devices. The connected devices include, but are not limited to, a keypad, a display, a speaker, a microphone, a joystick, and the like.

The processor 903 is responsible for managing the bus architecture and usual processing, and the memory 901 may store data used by the processor 903 in performing operations.

The processor 903 may be a central processing unit (CPU), an application specific integrated circuit (ASIC), a field-programmable gate array (FPGA), or a complex programmable logic device (CPLD). The processor may also adopt a multi-core architecture.

The processor is configured to execute any of the methods provided by the embodiments of the disclosure by calling the computer program stored in the memory and executing the obtained executable instruction. The processor and the memory may be physically separated.

The processor 903 is configured to read the computer program from the memory 901 and perform the following operations:
receiving configuration information and first information sent by a network device; and
sending a CSI report to the network device based on the configuration information and the first information;
in which the configuration information includes a CSI report sub-configuration, a trigger state configuration and an association relationship between the trigger state configuration and the CSI report sub-configuration; and
the first information is used to trigger part or all of CSI report sub-configurations.

Optionally, the trigger state configuration includes a first trigger state configuration and a second trigger state configuration;
the first trigger state configuration is associated with an entire set of the CSI report sub-configurations supported by a network; and
the second trigger state configuration is associated with a subset of the entire set of the CSI report sub-configurations supported by the network.

Optionally, different trigger state configurations are associated with an entire set of the CSI report sub-configurations supported by a network.

Optionally, different trigger state configurations are associated with a subset of an entire set of the CSI report sub-configurations supported by a network.

Optionally, the association relationship includes:
the trigger state configuration is directly associated with the CSI report sub-configuration; or,
the configuration information further includes a CSI report configuration, and the trigger state configuration is associated with the CSI report sub-configuration through the CSI report configuration.

Optionally, the association relationship is indicated by a code point of a dynamic signaling sent by the network device.

Optionally, the trigger state configuration and the CSI report sub-configuration are configured via a high-layer signaling.

Optionally, the first information is included in an RRC signaling and/or a dynamic signaling sent by the network device.

Optionally, the first information is further used to indicate a number and/or an index of the part or all of the CSI report sub-configurations.

Optionally, the CSI report includes an antenna pattern corresponding to the CSI report sub-configuration triggered by the first information.

It should be noted that the terminal provided by the embodiment of the disclosure can perform all method steps implemented by the method embodiments with the terminal as an execution entity, and can achieve the same technical effects. Therefore, the contents and beneficial effects in the embodiment that are the same as those of the method embodiments will not be repeated herein.

FIG. 10 is a schematic structural diagram of a network device provided by an embodiment of the disclosure. The network device includes: a memory 1001, a transceiver 1002 and a processor 1003.

The memory 1001 is configured to store a computer program, and the transceiver 1002 is configured to send and receive data under the control of the processor 1003.

In detail, the transceiver 1002 is controlled by the processor 1003 to send and receive data.

In FIG. 10, a bus architecture may include any number of interconnected buses and bridges, specifically one or more processors represented by the processor 1003 and various circuits of memories represented by the memory 1001 are linked together. The bus architecture may also link peripheral devices, voltage regulators, and various other circuits such as power management circuits together, which are well known in the art and will not be further described herein. There is a bus interface that provides an interface.

The transceiver 902 may include a plurality of elements, such as a transmitter and a receiver, for communicating with other devices over transmission mediums. The transmission mediums include wireless channels, wired channels, fiber optic cables, etc. The processor 1003 is responsible for managing the bus architecture and usual processing, and the memory 1001 may store data used by the processor 1003 in performing operations.

The processor 1003 may be a CPU, an ASIC, a FPGA, or a CPLD. The processor may also adopt a multi-core architecture.

The processor 1003 is configured to read the computer program from the memory 1001 and perform the following operations:
sending configuration information and first information to a terminal, in which the configuration information includes a CSI report sub-configuration, a trigger state configuration and an association relationship between the trigger state configuration and the CSI report sub-configuration, and the first information is used to trigger part or all of CSI report sub-configurations; and
receiving the CSI report sent by the terminal based on the configuration information and the first information.

Optionally, the trigger state configuration includes a first trigger state configuration and a second trigger state configuration;
the first trigger state configuration is associated with an entire set of the CSI report sub-configurations supported by a network; and
the second trigger state configuration is associated with a subset of the entire set of the CSI report sub-configurations supported by the network.

Optionally, different trigger state configurations are associated with an entire set of the CSI report sub-configurations supported by a network.

Optionally, different trigger state configurations are associated with a subset of an entire set of the CSI report sub-configurations supported by a network.

Optionally, the association relationship includes:
the trigger state configuration is directly associated with the CSI report sub-configuration; or,
the configuration information further includes a CSI report configuration, and the trigger state configuration is associated with the CSI report sub-configuration through the CSI report configuration.

Optionally, the association relationship is indicated by a code point of a dynamic signaling sent by the network device.

Optionally, the trigger state configuration and the CSI report sub-configuration are configured via a high-layer signaling.

Optionally, the first information is included in an RRC signaling and/or a dynamic signaling sent by the network device.

Optionally, the first information is further used to indicate a number and/or an index of the part or all of the CSI report sub-configurations.

Optionally, the network device is further configured to:
determine an antenna pattern corresponding to the CSI report sub-configuration triggered by the first information based on the CSI report.

It should be noted that the network device provided by the embodiment of the disclosure can perform all method steps implemented by the method embodiments with the network device as an execution entity, and can achieve the same technical effects. Therefore, the contents and beneficial effects in the embodiment that are the same as those of the method embodiments will not be repeated herein.

FIG. 11 is a schematic structural diagram of an apparatus for sending a CSI report provided by an embodiment of the disclosure. As illustrated in FIG. 11, the apparatus includes:
a receiving module 1101, configured to receive configuration information and first information sent by a network device; and
a sending module 1102, configured to send the CSI report to the network device based on the configuration information and the first information;
in which the configuration information includes a CSI report sub-configuration, a trigger state configuration and an association relationship between the trigger state configuration and the CSI report sub-configuration; and
the first information is used to trigger part or all of CSI report sub-configurations.

Optionally, the trigger state configuration includes a first trigger state configuration and a second trigger state configuration;
the first trigger state configuration is associated with an entire set of the CSI report sub-configurations supported by a network; and
the second trigger state configuration is associated with a subset of the entire set of the CSI report sub-configurations supported by the network.

Optionally, different trigger state configurations are associated with an entire set of the CSI report sub-configurations supported by a network.

Optionally, different trigger state configurations are associated with a subset of an entire set of the CSI report sub-configurations supported by a network.

Optionally, the association relationship includes:
the trigger state configuration is directly associated with the CSI report sub-configuration; or,
the configuration information further includes a CSI report configuration, and the trigger state configuration is associated with the CSI report sub-configuration through the CSI report configuration.

Optionally, the association relationship is indicated by a code point of a dynamic signaling sent by the network device.

Optionally, the trigger state configuration and the CSI report sub-configuration are configured via a high-layer signaling.

Optionally, the first information is included in an RRC signaling and/or a dynamic signaling sent by the network device.

Optionally, the first information is further used to indicate a number and/or an index of the part or all of the CSI report sub-configurations.

Optionally, the CSI report includes an antenna pattern corresponding to the CSI report sub-configuration triggered by the first information.

FIG. 12 is a schematic structural diagram of an apparatus for receiving a CSI report provided by an embodiment of the disclosure. As illustrated in FIG. 12, the apparatus includes:
a sending module 1201, configured to send configuration information and first information to a terminal, in which the configuration information includes a CSI report sub-configuration, a trigger state configuration and an association relationship between the trigger state configuration and the CSI report sub-configuration, and the first information is used to trigger part or all of CSI report sub-configurations; and
a receiving module 1202, configured to receive the CSI report sent by the terminal based on the configuration information and the first information.

Optionally, the trigger state configuration includes a first trigger state configuration and a second trigger state configuration;
the first trigger state configuration is associated with an entire set of the CSI report sub-configurations supported by a network; and
the second trigger state configuration is associated with a subset of the entire set of the CSI report sub-configurations supported by the network.

Optionally, different trigger state configurations are associated with an entire set of the CSI report sub-configurations supported by a network.

Optionally, different trigger state configurations are associated with a subset of an entire set of the CSI report sub-configurations supported by a network.

Optionally, the association relationship includes:
the trigger state configuration is directly associated with the CSI report sub-configuration; or,
the configuration information further includes a CSI report configuration, and the trigger state configuration is associated with the CSI report sub-configuration through the CSI report configuration.

Optionally, the association relationship is indicated by a code point of a dynamic signaling sent by a network device.

Optionally, the trigger state configuration and the CSI report sub-configuration are configured via a high-layer signaling.

Optionally, the first information is included in an RRC signaling and/or a dynamic signaling sent by a network device.

Optionally, the first information is further used to indicate a number and/or an index of the part or all of the CSI report sub-configurations.

Optionally, the apparatus further includes:
a determining module, configured to determine an antenna pattern corresponding to the CSI report sub-configuration triggered by the first information based on the CSI report.

The methods and apparatuses provided in the above embodiments of the disclosure are based on the same inventive concept. Since the methods and apparatuses solve problems based on similar principles, the implementations of the methods and apparatuses can refer to each other, which will not be repeated herein.

It should be noted that the division of units in the embodiments of the disclosure is exemplary. The division is only a logical division, and there are other types of divisions in practical applications. The functional units in each embodiment of the disclosure may be integrated into a single processing unit or physically separated, or two or more units may be integrated into a single unit. The integrated units described above may be implemented either in hardware or as software units.

The integrated units may be stored in a processor-readable storage medium if they are implemented in the form of software functional units and sold or used as independent products. Based on this understanding, the essence of the technical solution of the disclosure, a portion of the technical solution of the disclosure that contributes to related arts, or all or part of the technical solution of the disclosure may be embodied in the form of software product. The computer software product is stored in a storage medium and includes several instructions to cause a computer device (e.g., a personal computer, a server and a network device) or a processor to implement all or part of the steps of the method in the embodiments of the disclosure. The storage medium includes: an USB flash drive, a mobile hard drive, a read-only memory (ROM), a random access memory (RAM), a disk or a compact disc-ROM (CD-ROM), and other mediums that can be used to store program codes.

It should be noted that the apparatuses provided in the embodiments of the disclosure are capable of performing the steps of each of the methods provided by the above method embodiments and achieving the same technical effects. Therefore, the same contents and beneficial effects in the method embodiments will not be repeated in the apparatus embodiments of the disclosure.

The embodiment of the disclosure also provides a non-transitory readable storage medium. The readable storage medium stores a computer program, and the computer program is used to cause the processor to implement the method for sending the CSI report and the method for receiving the CSI report provided in the above embodiments, including:
receiving configuration information and first information sent by a network device; and sending the CSI report to the network device based on the configuration information and the first information; in which the configuration information includes a CSI report sub-configuration, a trigger state configuration and an association relationship between the trigger state configuration and the CSI report sub-configuration, and the first information is used to trigger part or all of CSI report sub-configurations;
   or,
sending configuration information and first information to a terminal, in which the configuration information includes a CSI report sub-configuration, a trigger state configuration and an association relationship between the trigger state configuration and the CSI report sub-configuration, and the first information is used to trigger part or all of CSI report sub-configurations; and receiving the CSI report sent by the terminal based on the configuration information and the first information.

The non-transitory readable storage medium may be any available medium or data storage device accessible by the processor. The medium includes, but is not limited to, a magnetic storage medium (e.g., a floppy disk, a hard disk, a magnetic tape, and a magnetooptical (MO) disk), an optical storage medium (e.g., a compact disc (CD), a digital versatile disc (DVD), a Blu-ray disc (BD) and a high-definition versatile disc (HVD)), and a semiconductor storage medium (e.g., a ROM, an erasable programmable read only memory (EPROM), an electrically EPROM (EEPROM), a NAND FLASH, and a solid-state drive (SSD)).

Those skilled in the art understand that the embodiments of the disclosure may be provided as a method, a system or a computer program product. Therefore, the disclosure may be implemented in the form of all hardware embodiments, all software embodiments, or a combination of hardware embodiments and software embodiments. Moreover, the disclosure may be implemented in the form of a computer program product embodied on one or more computer-usable storage mediums (including but not limited to a magnetic disk memory and an optical memory) containing computer usable program codes.

The disclosure is described with reference to flowcharts and/or block diagrams of the method, the apparatus (system) and the computer program product according to the embodiments of the disclosure. It should be understood that each process and/or block in the flowcharts and/or block diagrams, or any combination of processes and/or blocks in the flowcharts and/or block diagrams, can be implemented by computer-executable instructions. These computer-executable instructions are provided to a processor of a general-purpose computer, a dedicated computer, an embedded processor or a programmable data processing device to produce a machine, so that the instructions executed by the processor of the computer or the programmable data processing device can produce apparatuses for implementing functions specified in one or more processes in the flowcharts and/or one or more blocks in the block diagrams.

These processor-executable instructions may also be stored in a processor-readable memory that can direct a computer or other programmable data processing devices to operate in a specific way, so that the instructions stored in the processor-readable memory can produce an article containing command units used for implementing the functions specified in one or more processes in the flowcharts and/or one or more blocks in the block diagrams.

These processor-executable instructions may also be loaded onto a computer or other programmable data processing devices, so that a series of operation steps can be executed on the computer or other programmable devices to produce processes implementable by the computer. The instructions executed on the computer or programmable devices provide steps for implementing the functions specified in one or more processes in the flowcharts and/or one or more blocks in the block diagrams.

Obviously, various changes and modifications made by those skilled in the field to the disclosure are within the spirit and scope of the disclosure. Since these changes and modifications to the disclosure fall within the scope of the claims of the disclosure and their equivalents, the disclosure is intended to include these changes and modifications.

## Claims

1. A method for sending a channel state information (CSI) report, comprising:
receiving configuration information and first information sent by a network device; and
sending the CSI report to the network device based on the configuration information and the first information;
wherein the configuration information comprises a CSI report sub-configuration, a trigger state configuration and an association relationship between the trigger state configuration and the CSI report sub-configuration; and
the first information is used to trigger part or all of CSI report sub-configurations.

2. The method of claim 1, wherein the trigger state configuration comprises a first trigger state configuration and a second trigger state configuration;
the first trigger state configuration is associated with an entire set of the CSI report sub-configurations supported by a network; and
the second trigger state configuration is associated with a subset of the entire set of the CSI report sub-configurations supported by the network.

3. The method of claim 1, wherein different trigger state configurations are associated with an entire set of the CSI report sub-configurations supported by a network.

4. The method of claim 1, wherein different trigger state configurations are associated with a subset of an entire set of the CSI report sub-configurations supported by a network.

5. The method of any one of claims 1-4, wherein the association relationship comprises:
the trigger state configuration is directly associated with the CSI report sub-configuration; or,
the configuration information further comprises a CSI report configuration, and the trigger state configuration is associated with the CSI report sub-configuration through the CSI report configuration.

6. The method of claim 1, wherein the association relationship is indicated by a code point of a dynamic signaling sent by the network device.

7. The method of claim 1, wherein the trigger state configuration and the CSI report sub-configuration are configured via a high-layer signaling.

8. The method of claim 1, wherein the first information is included in a radio resource control (RRC) signaling and/or a dynamic signaling sent by the network device.

9. The method of claim 1, wherein the first information is further used to indicate a number and/or an index of the part or all of the CSI report sub-configurations.

10. The method of claim 1, wherein the CSI report comprises an antenna pattern corresponding to the CSI report sub-configuration triggered by the first information.

11. A method for receiving a channel state information (CSI) report, comprising:
sending configuration information and first information to a terminal, wherein the configuration information comprises a CSI report sub-configuration, a trigger state configuration and an association relationship between the trigger state configuration and the CSI report sub-configuration, and the first information is used to trigger part or all of CSI report sub-configurations; and
receiving the CSI report sent by the terminal based on the configuration information and the first information.

12. The method of claim 11, wherein the trigger state configuration comprises a first trigger state configuration and a second trigger state configuration;
the first trigger state configuration is associated with an entire set of the CSI report sub-configurations supported by a network; and
the second trigger state configuration is associated with a subset of the entire set of the CSI report sub-configurations supported by the network.

13. The method of claim 11, wherein different trigger state configurations are associated with an entire set of the CSI report sub-configurations supported by a network.

14. The method of claim 11, wherein different trigger state configurations are associated with a subset of an entire set of the CSI report sub-configurations supported by a network.

15. The method of any one of claims 11-14, wherein the association relationship comprises:
the trigger state configuration is directly associated with the CSI report sub-configuration; or,
the configuration information further comprises a CSI report configuration, and the trigger state configuration is associated with the CSI report sub-configuration through the CSI report configuration.

16. The method of claim 11, wherein the association relationship is indicated by a code point of a dynamic signaling sent by a network device.

17. The method of claim 11, wherein the trigger state configuration and the CSI report sub-configuration are configured via a high-layer signaling.

18. The method of claim 11, wherein the first information is included in a radio resource control (RRC) signaling and/or a dynamic signaling sent by a network device.

19. The method of claim 11, wherein the first information is further used to indicate a number and/or an index of the part or all of the CSI report sub-configurations.

20. The method of claim 11, further comprising:
determining an antenna pattern corresponding to the CSI report sub-configuration triggered by the first information based on the CSI report.

21. A terminal, comprising a memory, a transceiver and a processor;
wherein the memory is configured to store a computer program, the transceiver is configured to send and receive data under the control of the processor, and the processor is configured to read the computer program from the memory and perform the following operations:
receiving configuration information and first information sent by a network device; and
sending a CSI report to the network device based on the configuration information and the first information;
wherein the configuration information comprises a CSI report sub-configuration, a trigger state configuration and an association relationship between the trigger state configuration and the CSI report sub-configuration; and
the first information is used to trigger part or all of CSI report sub-configurations.

22. The terminal of claim 21, wherein the trigger state configuration comprises a first trigger state configuration and a second trigger state configuration;
the first trigger state configuration is associated with an entire set of the CSI report sub-configurations supported by a network; and
the second trigger state configuration is associated with a subset of the entire set of the CSI report sub-configurations supported by the network.

23. The terminal of claim 21, wherein different trigger state configurations are associated with an entire set of the CSI report sub-configurations supported by a network.

24. The terminal of claim 21, wherein different trigger state configurations are associated with a subset of an entire set of the CSI report sub-configurations supported by a network.

25. The terminal of any one of claims 21-24, wherein the association relationship comprises:
the trigger state configuration is directly associated with the CSI report sub-configuration; or,
the configuration information further comprises a CSI report configuration, and the trigger state configuration is associated with the CSI report sub-configuration through the CSI report configuration.

26. The terminal of claim 21, wherein the association relationship is indicated by a code point of a dynamic signaling sent by the network device.

27. The terminal of claim 21, wherein the trigger state configuration and the CSI report sub-configuration are configured via a high-layer signaling.

28. The terminal of claim 21, wherein the first information is included in a radio resource control (RRC) signaling and/or a dynamic signaling sent by the network device.

29. The terminal of claim 21, wherein the first information is further used to indicate a number and/or an index of the part or all of the CSI report sub-configurations.

30. The terminal of claim 21, wherein the CSI report comprises an antenna pattern corresponding to the CSI report sub-configuration triggered by the first information.

31. A network device, comprising a memory, a transceiver and a processor;
wherein the memory is configured to store a computer program, the transceiver is configured to send and receive data under the control of the processor, and the processor is configured to read the computer program from the memory and perform the following operations:
sending configuration information and first information to a terminal, wherein the configuration information comprises a CSI report sub-configuration, a trigger state configuration and an association relationship between the trigger state configuration and the CSI report sub-configuration, and the first information is used to trigger part or all of CSI report sub-configurations; and
receiving the CSI report sent by the terminal based on the configuration information and the first information.

32. The network device of claim 31, wherein the trigger state configuration comprises a first trigger state configuration and a second trigger state configuration;
the first trigger state configuration is associated with an entire set of the CSI report sub-configurations supported by a network; and
the second trigger state configuration is associated with a subset of the entire set of the CSI report sub-configurations supported by the network.

33. The network device of claim 31, wherein different trigger state configurations are associated with an entire set of the CSI report sub-configurations supported by a network.

34. The network device of claim 31, wherein different trigger state configurations are associated with a subset of an entire set of the CSI report sub-configurations supported by a network.

35. The network device of any one of claims 31-34, wherein the association relationship comprises:
the trigger state configuration is directly associated with the CSI report sub-configuration; or,
the configuration information further comprises a CSI report configuration, and the trigger state configuration is associated with the CSI report sub-configuration through the CSI report configuration.

36. The network device of claim 31, wherein the association relationship is indicated by a code point of a dynamic signaling sent by the network device.

37. The network device of claim 31, wherein the trigger state configuration and the CSI report sub-configuration are configured via a high-layer signaling.

38. The network device of claim 31, wherein the first information is included in a radio resource control (RRC) signaling and/or a dynamic signaling sent by the network device.

39. The network device of claim 31, wherein the first information is further used to indicate a number and/or an index of the part or all of the CSI report sub-configurations.

40. The network device of claim 31, further configured to:
determine an antenna pattern corresponding to the CSI report sub-configuration triggered by the first information based on the CSI report.

41. An apparatus for sending a channel state information (CSI) report, comprising:
a receiving module, configured to receive configuration information and first information sent by a network device; and
a sending module, configured to send the CSI report to the network device based on the configuration information and the first information;
wherein the configuration information comprises a CSI report sub-configuration, a trigger state configuration and an association relationship between the trigger state configuration and the CSI report sub-configuration, and the first information is used to trigger part or all of CSI report sub-configurations.

42. The apparatus of claim 41, wherein the trigger state configuration comprises a first trigger state configuration and a second trigger state configuration;
the first trigger state configuration is associated with an entire set of the CSI report sub-configurations supported by a network; and
the second trigger state configuration is associated with a subset of the entire set of the CSI report sub-configurations supported by the network.

43. The apparatus of claim 41, wherein different trigger state configurations are associated with an entire set of the CSI report sub-configurations supported by a network.

44. The apparatus of claim 41, wherein different trigger state configurations are associated with a subset of an entire set of the CSI report sub-configurations supported by a network.

45. The apparatus of any one of claims 41-44, wherein the association relationship comprises:
the trigger state configuration is directly associated with the CSI report sub-configuration; or,
the configuration information further comprises a CSI report configuration, and the trigger state configuration is associated with the CSI report sub-configuration through the CSI report configuration.

46. The apparatus of claim 41, wherein the association relationship is indicated by a code point of a dynamic signaling sent by the network device.

47. The apparatus of claim 41, wherein the trigger state configuration and the CSI report sub-configuration are configured via a high-layer signaling.

48. The apparatus of claim 41, wherein the first information is included in a radio resource control (RRC) signaling and/or a dynamic signaling sent by the network device.

49. The apparatus of claim 41, wherein the first information is further used to indicate a number and/or an index of the part or all of the CSI report sub-configurations.

50. The apparatus of claim 41, wherein the CSI report comprises an antenna pattern corresponding to the CSI report sub-configuration triggered by the first information.

51. An apparatus for receiving a channel state information (CSI) report, comprising:
a sending module, configured to send configuration information and first information to a terminal, wherein the configuration information comprises a CSI report sub-configuration, a trigger state configuration and an association relationship between the trigger state configuration and the CSI report sub-configuration, and the first information is used to trigger part or all of CSI report sub-configurations; and
a receiving module, configured to receive the CSI report sent by the terminal based on the configuration information and the first information.

52. The apparatus of claim 51, wherein the trigger state configuration comprises a first trigger state configuration and a second trigger state configuration;
the first trigger state configuration is associated with an entire set of the CSI report sub-configurations supported by a network; and
the second trigger state configuration is associated with a subset of the entire set of the CSI report sub-configurations supported by the network.

53. The apparatus of claim 51, wherein different trigger state configurations are associated with an entire set of the CSI report sub-configurations supported by a network.

54. The apparatus of claim 51, wherein different trigger state configurations are associated with a subset of an entire set of the CSI report sub-configurations supported by a network.

55. The apparatus of any one of claims 51-54, wherein the association relationship comprises:
the trigger state configuration is directly associated with the CSI report sub-configuration; or,
the configuration information further comprises a CSI report configuration, and the trigger state configuration is associated with the CSI report sub-configuration through the CSI report configuration.

56. The apparatus of claim 51, wherein the association relationship is indicated by a code point of a dynamic signaling sent by a network device.

57. The apparatus of claim 51, wherein the trigger state configuration and the CSI report sub-configuration are configured via a high-layer signaling.

58. The apparatus of claim 51, wherein the first information is included in a radio resource control (RRC) signaling and/or a dynamic signaling sent by a network device.

59. The apparatus of claim 51, wherein the first information is further used to indicate a number and/or an index of the part or all of the CSI report sub-configurations.

60. The apparatus of claim 51, further comprising:
a determining module, configured to determine an antenna pattern corresponding to the CSI report sub-configuration triggered by the first information based on the CSI report.

61. A non-transitory readable storage medium, wherein the non-transitory readable storage medium stores a computer program, and the computer program is used to cause a computer to implement the method of any one of claims 1-10.

62. A non-transitory readable storage medium, wherein the non-transitory readable storage medium stores a computer program, and the computer program is used to cause a computer to implement the method of any one of claims 11-20.
